# EUROPEAN PATENT SPECIFICATION

(11) **EP 0 557 836 B1**
(45) Date of publication and mention of the grant of the patent: **08.07.1998**
(21) Application number: 93102300.6
(22) Date of filing: 06.02.1990
(51) Int. Cl.: C08L 25/04, C08K 9/04, C08K 9/06

(54) **Polystyrene-based Resin composition**
Harzzusammensetzung auf der Basis von Polystyrol
Composition de résine à la base de polystyrène

(30) Priority: 10.02.1989 JP 29680/89; 21.02.1989 JP 39353/89; 31.03.1989 JP 78166/89
(43) Date of publication of application: 01.09.1993
(62) Divisional of application: 90102290.5
(73) Proprietor: IDEMITSU KOSAN COMPANY LIMITED, Tokyo 100 (JP)
(72) Inventor: Nakano, Akikazu c/o Idemitsu Petrochem. Co., Ltd.,, Ichihara-shi, Chiba-ken (JP); Sumitomo, Takashi, Sakura-shi Chiba-ken (JP); Yamasaki, Komei, Sodegaura-shi Chiba-ken (JP); Funaki, Keisuke, Ichihara-shi, Chiba-ken (JP)
(74) Representative: Türk, Gille, Hrabal, Leifert

(56) References cited:
- EP-A- 0 134 445
- FR-A- 1 505 256
- US-A- 3 619 229
- CHEMICAL ABSTRACTS, vol. 81, no. 24, 16 December 1974, Columbus, Ohio, US; abstract no. 153832v,
- CHEMICAL ABSTRACTS, vol. 106, no. 24, 5 June 1987, Columbus, Ohio, US; abstract
- no. 197329a,

## Description

### BACKGROUND OF THE INVENTION

### 1. Field of the invention

This invention relates to a styrene-based resin composition which comprises a surface-treated inorganic filler, and more particularly, to a styrene-based resin composition that is available for heat resistant parts in automobiles, domestic electric appliances and electric and electronic devices, or heat resistant structural materials for industrial use.

### 2. Description of the Related Arts

A styrene-based polymer having a syndiotactic configuration shows excellent mechanical strength, heat resistance, solvent resistance and electric characteristics compared with a styrene-based polymer having an atactic configuration. Therefore, in recent years, various studies to formulate a styrene-based polymer having a syndiotactic configuration to improve heat resistance or a solvent resistant thermoplastic resin, have been carried out. For example, JP-A-257950/1987 discloses a thermoplastic resin composition to which a polystyrene having a syndiotactic configuration is added in order to improve the heat resistance of the thermoplastic resin. However, while the composition obtained certainly has an improved heat resistance, its tensile strength and elongation performance are markedly lowered in a composition with a resin which has less affinity with polystyrene. As a result, the composition is not preferred depending on the use thereof due to its poorer physical properties. Furthermore, there are problems in not only lowering in physical properties but also in its appearance, such as peeling of the surface layer of a molded product.

In order to overcome the above problems, the present inventors previously proposed a technique in which a specific block copolymer is added to improve affinity and dispersibility when blending a styrene-based polymer having a syndiotactic configuration with a thermoplastic resin, which has less affinity for the styrene-based polymer. For example, a polyamide resin has been known to have excellent moldability and heat resistance, and sufficient rigidity. Therefore, it has been used as a molding material for various products such as domestic materials, and parts of electric and mechanical instruments. However, the polyamide resin has a disadvantage in terms of water resistance although it has the excellent properties as mentioned above.

An attempt has been made to overcome the above disadvantage by adding the above styrene-based polymer to the polyamide. When the above styrene-based polymer is blended with the polyamide, a block copolymer of polystyrene-polyamide is added thereto. In addition, when the above styrene-based polymer is blended with a polybutyrene terephthalate, a block copolymer of a polystyrene-polybutyrene terephthalate is added thereto. That is, this technique adds a block copolymer comprising a polystyrene and a resin to be blended with the polystyrene as a modifier. According to this technique, modification effects can be obtained to some extent, and mechanical properties are particularly improved compared with that disclosed in JP-A-257950/1987.

However, according to this technique, it is necessary to prepare a block copolymer previously when a blended material is prepared so that there is a disadvantage in that complicated procedures are required for industrial production.

On the other hand, an attempt has been made by formulating an inorganic filler such as glass fiber to various synthetic resins to improve mechanical properties, particularly rigidity and heat resistance. However, a styrene-based polymer has insufficient adhesiveness with an inorganic filler, so various investigations have been made concerning additives to improve adhesiveness or a surface treating agent of the inorganic filler. As a result, surface treating agents have been developed such as those in which various aminosilane compounds are combined with resins of polyester, urethane, epoxy, acryl and vinyl acetate, and additives such as maleic acid anhydride-styrene copolymer. More specifically, there have been known a silane coupling agent for glass fiber which is used as a surface treating agent, and a styrene/maleic anhydride-styrene/glass fiber composition as a composition in which an additive is formulated (JP-A-161836/1980 and JP-B-19097/1974). However, the improvements brought about by these have also been inadequate.

Glass fiber-reinforced vinyl aromatic hydrocarbon polymer resins such as polystyrene, glycidyl methacrylate-styrene resin or composites and acrylonitril-butadiene-styrene copolymer resins are already known from JP-A-49-062 548 and EP-A-0 134 445, respectively. In both cases silane- and Ti-treated fillers are used. However, bending strength and bending modulus of such resins are insufficient, so that improvements have been desired.

In addition, JP-A-257948/1987 and 182344/1989, proposed resin compositions in which an inorganic filler is added to a syndiotactic polystyrene, and an inorganic filler is added to a syndiotactic polystyrene/a thermoplastic resin and/or a rubber, respectively, to improve heat resistance and mechanical properties. However, the adhesiveness of the syndiotactic polystyrene and the inorganic filler is also insufficient in these compositions, so improvements have been desired.

That is, in conventional attempts in which the surfaces of various inorganic fillers and additives are treated with various surface treating agents, adhesiveness with a styrene-based polymer, particularly with a syndiotactic polystyrene is insufficient. In particular, impact resistance is low so an improvement in impact resistance has been desired.

### SUMMARY OF THE INVENTION

An object of the present invention is to provide a styrene-based resin composition which has good affinity and dispersibility derived from a styrene-based polymer having a syndiotactic configuration and a thermoplastic resin or an inorganic filler having less affinity therewith.

Another object of the present invention is to provide a surface-treated inorganic filler and an additive which can give sufficient strength to the above composition.

The above objects can be achieved according to the present invention by
a styrene-based resin composition comprising
   (a') 100 parts by weight of a styrene-based polymer having a syndiotactic configuration such that the proportion in the racemic diad is at least 75 % or the proportion in a racemic pentad is at least 30 % and having no functional group,
   (g) 0.01 to 30 parts by weight of a styrene-based polymer having a molecular weight of 1000 to 500 000 and containing 0.01 to 40.0 mole-% of a vinyl compound having an epoxy group, and
   (h) 1 to 550 parts by weight of an inorganic filler surface-treated by a silane compound or a titanium compound which is organic.

The above styrene-based polymer (g) preferably is a copolymer of a vinyl compound having an epoxy group selected from the group consisting of glycidyl methacrylate, glycidyl acrylate, vinyl glycidyl ether, glycidyl ether of hydroxyalkyl (meth)acrylate, glycidyl ether of polyalkyleneglycol (meth)acrylate and glycidyl itaconate, and particularly preferred as said styrene-based polymer (g) is a styrene-glycidyl methacrylate copolymer.

According to a further preferred embodiment the inorganic filler (h) is glass fiber.

According to a further aspect the present invention relates to a styrene-based resin composition which comprises
(a') 100 parts by weight of a styrene-based polymer having a syndiotactic configuration such that the proportion in the racemic diad is at least 75 % or the proportion in a racemic pentad is at least 30 % and having no functional group, and
   1 to 550 parts by weight of a surface-treated inorganic filler which comprises 100 parts by weight of an inorganic filler surface-treated with a mixture composed of (g) 0.1 to 5 parts by weight of a styrene-based polymer having a molecular weight of 1000 to 500 000 and containing 0.01 to 40.0 mole-% of a vinyl compound having an epoxy group and (i) 0.05 to 1 part by weight of a silane compound or a titanium compound which is organic.

### DESCRIPTION OF THE PREFERRED EMBODIMENTS

The resin composition of the present invention comprises the main components (a'), (g) and (h).

A styrene-based polymer having a syndiotactic configuration as defnied above and having no functional group to be used as component (a') may be any styrene-based polymer, provided it has a syndiotactic configuration as defined above and does not have a functional group, and those containing at least 25% by weight of a recurring unit derived from a vinyl aromatic compound represented by the formula: 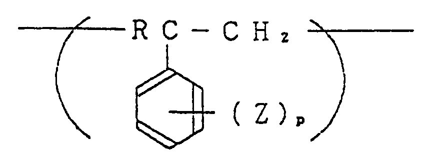 (wherein R represents a hydrogen atom or an alkyl group having 1 to 4 carbon atoms, Z represents a hydrogen atom, a halogen atom or an alkyl group having 1 to 4 carbon atoms; and p is an integer of 1 to 5) in the polymer can be used.

The styrene-based polymer includes, for example, a styrene polymer or its derivatives and, for example, a styrene-based polymer modified with a natural or synthetic elastomer such as polybutadiene, polyisoprene, butyl rubber, EPDM, ethylene-propylene copolymer, natural rubber and epichlorohydrin, or a copolymer containing styrene such as styrene-methyl styrene copolymer and styrene-butadiene copolymer.

The styrene-based resin having a syndiotactic configuration refers to a polymer with a stereo structure such that phenyl groups or substituted phenyl groups are located alternately as side chains at opposite positions relative to the main chain composed of carbon-carbon bonds. Tacticity is quantitatively determined by a nuclear magnetic resonance method using a carbon isotope (¹³C-NMR method). The tacticity, as determined by the ¹³C-NMR method, is indicated in terms of proportions of structural units continuously connected to each other, i.e., a diad in which two structural units are connected to each other, a triad in which three structural units are connected to each other, and a pentad in which five structural units are connected to each other. The styrene-based resin having a syndiotactic configuration has a syndiotactic configuration, such that the proportion in the racemic diad is at least 75% and is preferably at least 85%, or the proportion in a racemic pentad is at least 30% and is preferably at least 50%. The styrene-based resin includes polystyrene, poly(alkylstyrene), poly(halogenated styrene), poly(alkoxystyrene), poly(vinyl benzoic ester), and their mixtures or copolymers containing the above polymers as the main components.

Poly(alkylstyrene) includes poly(methylstyrene), poly(ethylstyrene), Poly(isopropylstyrene), and poly(tert-butylstyrene). Poly(halogenated styrene) includes poly(chlorostyrene, poly(bromostyrene), and poly(fluorostyrene). Poly(alkoxystyrene) includes poly(methoxystyrene) and poly(ethoxystyrene). Of these, polystyrene, poly(p-methylstyrene), poly(m-methylstyrene), poly(p-tert-butylstyrene), poly(p-chlorostyrene), poly(m-chlorostyrene), poly(p-fluorostyrene) are the most preferred polymers. Copolymers of styrene and p-methylstyrene are the most preferred copolymers.

The molecular weight of the styrene-based resin of component (a'), which is used in the present invention, is not critical. The weight average molecular weight is preferably at least 10,000 and most preferably at least 50,000. the molecular weight distribution can be either wide or narrow, and various kinds of distribution are available.

A styrene-based resin having syndiotactic configuration can be produced, for example, by polymerizing a styrene-based monomer (corresponding to the above styrene-based resin) using a catalyst containing a titanium compound, and a condensate of water and trialkylaluminum in the presence of an inert hydrocarbon solvent or in the absence of a solvent (JP-A-187708/1987).

The styrene-based polymer having an epoxy group as the component (g) is to be used for treating the surface of the inorganic filler and as an additive to the resin. This component (g) is soluble in various solvents same as a silane compound or a titanium compound, which are component (i) metioned below, and are compatible with the styrene-based polymer to be used for the surface-treated inorganic filler. Specific examples of component (g) above include those prepared by copolymerizing a styrene or a styrene derivative with a vinyl compound having an epoxy group, or those prepared by copolymerizing a vinyl compound having an epoxy group with a styrene-based polymer.

Vinyl compounds having an epoxy group include, for example, glycidyl methacrylate, glycidyl acrylate, vinyl glycidyl ether, glycidyl ether of hydroxyalkyl (meth)acrylate, glycidyl ether of polyalkyleneglycol (meth)acrylate and glycidyl itaconate. Glycidyl methacrylate is particularly preferred. The styrene-based polymer, which is copolymerized with these vinyl compound can be prepared by the various conventionally known methods. For example, it can be prepared by copolymerizing a vinyl compound having an epoxy group with a styrene or styrene derivative in the presence of a radical initiator, or by graft polymerizing a vinyl compound having an epoxy group with a styrene-based polymer in the presence of an organic peroxide.

Specific examples of the styrene-based polymer which is copolymerized with the vinyl compound having an epoxy group include polymers prepared by reacting the vinyl compound having an epoxy group with the styrene-based polymer having a syndiotactic configuration, atactic polystyrene, isotactic polystyrene, polybutadiene-modified styrene-based polymer, butadiene-styrene copolymer or isoprene-styrene copolymer under heating or in the presence of a peroxide; and a styrene-glycidyl methacrylate copolymer prepared by polymerizing styrene and glycidyl methacrylate in the presence of a radical initiator. Among these, the styrene-glycidyl methacrylate copolymer is particularly preferred.

The styrene-based polymer which is copolymerized with the vinyl compound having an epoxy group can be prepared as mentioned above, but the vinyl compound unit having an epoxy group is contained in the copolymer in an amount of 0.01 to 40 mole %, preferable is 0.1 to 20 mole %, and the weight average molecular weight thereof is 1,000 to 500,000, preferable is 5,000 to 300,000. Here, the amount of the vinyl compound unit having an epoxy group is less than 0.01 mole % in the copolymer, the effect of improving adhesiveness of the styrene-based polymer having no functional group as component (a') and the inorganic filler cannot be obtained in some cases. Conversely, if it exceeds 40 mole %, compatibility with a styrene-based polymer having no functional group as a component (a') becomes poor, thereby impairing the mechanical properties. If the weight average molecular weight of the styrene-based polymer having an epoxy group is also less than 1,000, the effect of improving its adhesiveness cannot be obtained in some cases, while if it exceeds 500,000, dispersibility in the composition becomes poor some times. The amount of the vinyl compound unit having an epoxy group is that calculated from an epoxy equivalent measured according to JIS K 7236.

Next, the compounds to be used for surface-treating the silane compound or the titanium compound of component (i) and the inorganic filler of the component (h) are to be used as a coupling agent to improve the adhesiveness of the inorganic filler with the styrene-based polymer having an epoxy group as the component (g) above. Such compounds can be used optionally by selecting from those conventionally known as silane-type coupling agents and titanium-type coupling agents. Specific examples of the silane-type coupling agent include triethoxysilane, vinyltris (β-methoxyethoxy)-silane, γ-methacryloxypropyltrimethoxysilane, γ-glycidoxypropyltrimethoxysilane, β-(1,1-epoxycyclohexyl) ethyltrimethoxysilane, N-β-(aminoethyl)-γ-aminopropylmethoxy dimethoxysilane, N-β-(aminoethyl)-γ-aminopropyldimethylsilane, γ-aminopropyltriethoxysilane, N-phenyl-γ-aminopropyltrimethoxysilane, γ-mercaptopropyltrimethoxysilane, γ-chloropropyltrimethoxysilane, γ-aminopropyltrimethoxysilane, γ-aminopropyl-tris(2-methoxyethoxy)silane, N-methyl-γ-aminopropyltrimethoxysilane, N-vinylbenzyl-γ-aminopropyltriethoxysilane, triaminopropyltrimethoxysilane, 3-ureidopropyltrimethoxysilane, 3-4,5-dihydroimidazolpropyltriethoxysilane, hexamethyldisilazane, N,O-(bistrimethylsilyl)amide and N,N-bis(trimethylsilyl)urea. Among these, aminosilane and epoxysilane such as γ-aminopropyltriethoxysilane, N-β-(aminoethyl)-γ-aminopropylmethyldimethoxysilane, γ-glycidoxypropyltrimethoxysilane, β-(3,4-epoxycyclohexyl)ethyltrimethoxysilane are preferred.

In addition, specific examples of the titanium-type coupling agents include isopropyltriisostearoyltitanate, isopropyltridodecylbenzenesulfonyltitanate, isopropyltris(dioctylpyrophosphate)titanate, tetraisopropylbis (dioctylphosphite)titanate, tetraoctylbis(ditridecylphosphite) titanate, tetra(1,1-diallyloxymethyl-1-butyl)bis(ditridecyl) phosphitetitanate, bis(dioctylpyrophosphate)oxyacetatetitanate, bis(dioctylpyrophosphate)ethylenetitanate, isopropyltrioctanoyl titanate, isopropyldimethacrylisostearoyl titanate, isopropylisostearoyldiacryl titanate, isopropyltri(dioctylphosphate)titanate, isopropyltricumylphenyltitanate, isopropyltri(N-amido-ethyl, aminoethyl)titanate, dicumylphenyloxyacetate titanate and diisostearoylethylenetitanate. Among these, isopropyltri(N-amidoethyl, aminoethyl)titanate is preferred.

The inorganic filler to be used in the present invention may be a fiber, a granule or a powder. Fibrous inorganic fillers include, for example, glass fiber, carbon fiber and alumina fiber, of which glass fiber and carbon fiber are preferred. The glass fiber may be cloth-like, mat-like, chopped strand, short fiber and filaments, and in case of the chopped strand, preferred state is a length of 0.05 mm to 50 mm and a fiber diameter of 5 to 20 µm. In addition, the carbon fiber is preferably a polyacrylonitrile (PAN).

On the other hand, granular and powder inorganic fillers include, for example, talc, carbon black graphite, titanium dioxide, silica, mica, calcium carbonate, calcium sulfate, barium carbonate, magnesium carbonate, magnesium sulfate, barium sulfate, oxysulfate, tin oxide, alumina, kaolin, silicon carbide and metal powder. Talc, calcium carbonate and mica are particularly preferred among these. The preferred average particle size of talc is 0.3 to 20 µm, more preferably 0.6 to 10 µm. The preferred average particle size of calcium carbonate is 0.1 to 20 µm. In addition, the preferred average particle size of mica is 40 to 250 µm, more preferably 50 to 150 µm.

Among the above various inorganic fillers, glass fillers such as glass powder, glass flakes, glass beads, glass filament, glass fiber, glass roving and glass mat are particularly preferred.

In the present invention, the above surface-treated inorganic filler is blended in the composition in an amount of 1 to 550 parts by weight, preferably 5 to 200 parts by weight based on 100 parts by weight of the styrene-based polymer having no functional group. If the amount of the surface-treated inorganic filler is less than 1 part by weight, the filler will not be sufficiently effective. On the other hand, if it exceeds 550 parts by weight, dispersibility is poor, making molding difficult.

In addition to the method by which the styrene-based polymer having an epoxy group as component (g) is added to the resin composition comprising the styrene-based polymer having no functional group as component (a'), and the inorganic filler which is surface-treated with a silane or titanium compound, there is the method by which the styrene-based compound having an epoxy group as component (g) and the surface-treated inorganic filler which is surface-treated with a silane or titanium compound as component (i) are previously added to the styrene-based polymer having no functional group, and the latter is also preferred because the adhesiveness between the resin and the inorganic filler can be improved.

The surface-treated inorganic filler can be prepared by, for example, coating a solution comprising components (g) and (i), and various solvents and/or water on the inorganic filler.

During this treatment, the amount of components (g) and (i) to be coated on the inorganic filler are 0.1 to 5 parts by weight, preferably 0.5 to 2 parts by weight based on 100 parts by weight of the above inorganic filler. If the amount of component (g) to be coated is less than 0.1 part by weight, the inorganic filler cannot be coated uniformly, therefore, sufficient adhesive strength cannot be obtained when blended in the resin. As a result, the strengths of the resin products are sometimes reduced. If it exceeds 5 parts by weight, the inorganic filler also has poor dispersibililty in the composition, therefore the strength of the resin product is reduced.

The silane compound or the titanium compound of component (i) is coated on the inorganic filler in an amount of 0.05 to 1.0 part by weight, preferably 0.1 to 0.5 part by weight based on 100 parts by weight of the inorganic filler. If the amount of the component (i) is less than 0.05 parts by weight, adhesiveness is markedly reduced, while if it is blended in excess of 1 part by weight, increased adhesiveness cannot be expected.

Surface treatment of the inorganic filler using components (g) and (i) above can be carried out by the conventional method and is not particularly limited. For example, it can be carried out by optional methods such as sizing treatment, in which components (g) and (i), dissolved or suspended in organic solvents, are coated on the inorganic filler as the sizing agent,; dry mixing using a Henschel mixer, a super mixer, or a V-shaped blender; the spray method; the integral blend method and the dry concentrate method, depending on the form of the inorganic filler, but preferably carried out by sizing treatment, dry mixing and spray method.

In addition, a film-forming substance for a glass can be used together with the silane-type coupling agent above. The film forming substance is not particularly limited and includes polymers of polyester, urethane, epoxy, acrylic and vinyl acetate.

Furthermore, in order to prevent abrasion of the inorganic filler, various known lubricants can be added.

According to the above, the surface-treated inorganic filler of the present invention can be obtained. This surface-treated inorganic filler can be used as a filler for various resins such as polypropylene, polycarbonate and polyethylene, and is particularly preferred as a filler for blending with a styrene-based polymer having no functional group. In order to improve the mechanical properties of the styrene-based polymer having no functional group by blending the surface-treated inorganic filler, 1 to 550 parts by weight of the inorganic filler which is surface-treated with components (g) and (i) should be blended based on 100 parts by weight of component (a'), as in blending the inorganic filler which is surface-treated with the silane or titanium compound as component (h). If the amount is less than the above or is in excess of the above, a sufficient effect cannot be obtained as mentioned above.

Various antioxidants can be used in the present invention, but particularly preferred are phosphorus antioxidants including monophosphites and diphosphites, and phenolic antioxidants. Typical examples of monophosphites are tris(2,4-di-tert-butylphenyl)phosphite, and tris(mono or dinonylphenyl)phosphite.

Preferred diphosphites are the phosphorus compounds represented by the formula: 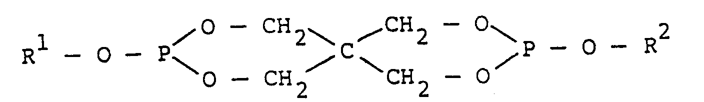 (wherein R¹ and R² are each an alkyl group having 1 to 20 carbon atoms, a cycloalkyl group having 3 to 20 carbon atoms, or an aryl group having 6 to 20 carbon atoms)

Typical examples of the phosphorus compounds represented by the above formula are distearylpentaerythritol diphosphite, dioctylpentaerythritol diphosphite, diphenylpentaerythritol diphosphite, bis(2,4-di-tert-butylphenyl)pentaerythritol diphosphite, bis(2,6-di-tert-butyl-4-methylphenyl)pentaerythritol diphosphite, and dicyclohexylpentaerythritol diphosphite and the like.

Various known compounds can be used as phenolic antioxidant. Representative examples of them are 2,6-di-tert-butyl-4-methylphenol, 2,6-diphenyl-4-methoxyphenol, 2,2'-methylenebis(6-tert-butyl-4-methylphenol), 2,2'-methylenebis(4-methyl-6-(α-methylcyclohexyl)phenol), 1,1-bis(5-tert-butyl-4-hydroxy-2-methylphenyl)butane, 2,2'-methylenebis(4-methyl-6-cyclohexylphenol), 2,2'-methylenebis(4-methyl-6-nonylphenol), 1,1,3-tris(5-tert-butyl-4-hydroxyl-2-methylphenol)butane, 2,2-bis(5-tert-butyl-4-hydroxy-2-methylphenyl)-4-n-dodecylmercaptobutane, ethyleneglycolbis(3,3-bis(3-tert-butyl-4-hydroxyphenol)butylate), 1-1-bis(3,5-dimethyl-2-hydroxyphenol)-3-(n-dodecylthio)butane, 4,4'-thiobis(6-tert-butyl-3-methylphenol), 1,3,5-tris(3,5-di-tert-butyl-4-hydroxybenzyl)-2,4,6-trimethylbenzene, 2,2-bis(3,5-di-tert-butyl-4-hydroxybenzyl)malonic acid dioctadecyl ester, n-octadecyl-3-(4-hydroxy-3,5-di-tert-butylphenyl)propionate, and tetrakis(methylene(3,5-di-tert-butyl-4-hydroxyhydrocinnamate))methane.

The above antioxidant is compounded in the amount of 0.0001 to 2 parts by weight, preferably 0.001 to 1 parts by weight per 100 parts by weight of the styrene-based resin having the syndiotactic configuration mentioned before.

Furthermore, a metal salt of an organic acid and/or an organic phosphorus compound can be added as the nuclear agent. These include various compounds, and the metal salt of the organic acid includes, for example, a metal salt such as sodium salt, calcium salt, aluminum salt or magnesium salt of an organic acid such as benzoic acid, p-(tert-butyl)benzoic acid, cyclohexane carboxylic acid (hexahydrobenzoic acid), aminobenzoic acid, β-naphthoeic acid, cyclopentane carboxylic acid, succinic acid, diphenylacetic acid, glutaric acid, isonicotinic acid, adipic acid, sebacic acid, phthalic acid, isophthalic acid, benzenesulfonic acid, glycolic acid, caproic acid, isocaproic acid, phenylacetic acid, cinnamic acid, lauric acid, myristic acid, palmitic acid, stearic acid and oleic acid. Among these, aluminum salt of p-(tert-butyl)benzoic acid, sodium salt of cyclohexane carboxylic acid and sodium salt of β-naphthoeic acid are particularly preferred.

In addition, the organic phosphorus compound includes an organic phosphorus compound (b₁) represented by the formula: 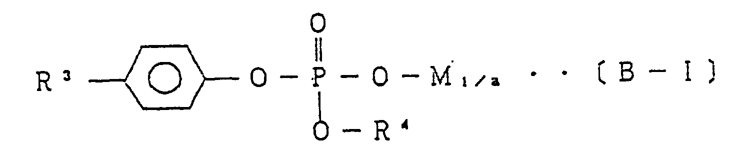 (wherein R³ represents a hydrogen atom or an alkyl group having 1 to 18 carbon atoms; R⁴ represents an alkyl group having 1 to 18 carbon atoms, 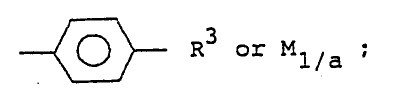 M represents Na, K, Mg, Ca or Al; and a represents an atomic valence of M)
or an organic phosphorus compound (b₂) represented by the formula: 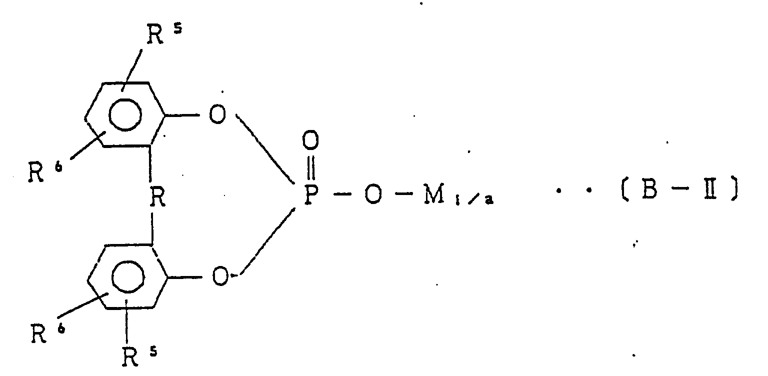 (wherein R represents methylene group, ethylidene group, propylidene group or isopropylidene group, R⁵ and R⁶ each represents a hydrogen atom or an alkyl group having 1 to 6 carbon atoms; and M and a have the same meanings as those defined above).

More detailed examples of the nuclear agent above are described in JP-A-201350/1989. The amount is 0.01 to 15 parts by weight, preferably 0.05 to 5 parts by weight based on 100 parts by weight of components (a) and (b).

The resin composition of the present invention can be obtained by blending the respective components above and kneading them at an optimal temperature, for example, 270 to 320°C. Blending and kneading can be carried out by the conventional manner. More specifically, they can be carried out by the melt-kneading method or the solution blending method using a kneader, mixing roll, extruder, Banbury mixer, Henschel mixer or kneading roll.

Various molding materials can be produced using the resin composition of the present invention. Shapes, molding process and crystallinity of the molding material are not particularly limited and can be determined depending on the characteristics required of the molding material to be produced. For example, the shape may be either a sheet-like or a three-dimensional structural material such as an container, and the molding process can be applied depending on the shape of the molding material, such as extrusion molding, injection molding, compression molding and blow molding. Furthermore, the degree of crystallization may be any of crystalline or amorphous.

According to the present invention, a polystyrene-based resin composition, which has improved affinity and dispersibility with no laminar peeling, excellent appearance and improved mechanical strength, can be obtained with our complex process.

The surface-treated inorganic filler of the present invention also has excellent adhesiveness, particularly with the styrene-based polymer and can improve the mechanical properties of the styrene-based polymer.

Accordingly, the present invention can be expected to be widely used for preparing various molding materials such as electric and electronic materials, industrial structural materials, domestic electric appliances, haberdashers and automobile parts such as connectors, coil bobbins, printed circuit boards, door panels and cylinder head covers.

The present invention is described in greater detail with reference to the following examples.

### REFERENCE EXAMPLE 1

### (Preparation of Polystyrene having Syndiotactic Configuration)

32 L (L=liter) of toluene as a solvent, and 1335 mmol (as aluminum atom) of methylaluminoxane and 13.4 mmol of tetraethoxytitanium as catalyst components were placed in a reactor to which 15 kg of styrene was introduced and polymerized for 2 hours at 55°C.

After polymerization, the reaction product was washed with a mixture of sodium hydroxide and methanol to decompose and remove the catalyst components, and was then dried to obtain 2.1 kg of a styrene polymer (polystyrene). The polymer was subjected to Soxhlet extraction using methyl ethyl ketone as a solvent to obtain 95% by weight of an extraction residue. The weight average molecular weight of the polymer was 400,000 and the melting point was 270°C. A ¹³C-NMR analysis showed absorption at 145.35 ppm, which is ascribable to the syndiotactic configuration, and the syndiotacticity indicated in terms of a racemic pentad, as calculated from the peak area, was 98%.

### REFERENCE EXAMPLE 2

### (Preparation of Styrene-Maleic anhydride copolymer)

3.68 g of 1,1-bis(tert-butylperoxy)-3,3,5-trimethylcyclohexane as a polymerization initiator was added to 10 kg of styrene monomer and 0.35 kg of maleic anhydride. The resulting mixture was stirred and then allowed to stand at room temperature overnight, and was filtered through a filter paper to obtain a starting material for polymerization. After replacing with styrene monomer inside an autoclave made of stainless and having a volume of 2 L, the temperature was raised to 100°C and the starting material for polymerization was introduced into the autoclave at a rate of 8 ml/min, and 4 L of a liquid material was distilled from the autoclave. The viscous liquid material distilled after the above liquid material, was introduced to a large amount of hexane to precipitate a styrene-maleic anhydride copolymer resin. After removing the hexane, its composition was analyzed with a ¹³C-NMR to give the result of styrene/maleic anhydride = 99/1 mol %. In addition, the weight average molecular weight measured by a gel permeation chromatography (GPC) gave the result of 200,000.

### REFERENCE EXAMPLE 3

### (Preparation of Polystyrene having a Syndiotactic Configuration)

Two liters of toluene used as a solvent, and 5 mmol of tetraethoxytitanium and 500 mmol (as aluminum atom) of methylaluminoxane used as catalyst components were placed in a reactor, and 15 L of styrene was introduced thereinto and polymerized for 4 hours at 55°C.

After polymerization, the reaction product was washed with a mixture of hydrochloric acid and methanol to decompose and remove the catalyst components, and then dried to obtain 2.5 kg of a styrene polymer (polystyrene). The polymer was subjected to Soxhlet extraction using methyl ethyl ketone as a solvent to obtain 97% by weight of an extraction residue. The weight average molecular weight of the polymer was 400,000, the number average molecular weight thereof was 180,000 and the melting point was 269°C. A ¹³C-NMR analysis (solvent: 1,2-dichlorobenzene) showed an absorption at 145.35 ppm, which was ascribable to the syndiotactic configuration, and the syndiotacticity indicated in terms of racemic pentad calculated from the peak area was 98%.

### EXAMPLE 1

To 100 parts by weight of the syndiotactic polystyrene obtained in Reference Example 3 were added 0.7 part by weight of (2,6-di-tert-butyl-4-methylphenyl) pentaerythritol diphosphite (trade mark: PEP-36, produced by Adeka Argus Co., Ltd.) and 0.1 part by weight of 2,6-di-tert-butyl-4-phenol (trade mark: Sumilizer BHT, produce by Sumitomo Chemical Co., Ltd.) as anti-oxidants and a further 1 part by weight of aluminum p-(tert-butyl)benzoate (trade name: PTBBA-A1, produced by Dainippon Ink & Chemicals Inc.) and 5 parts by weight of styrene-glycidyl methacrylate (5 mole %) copolymer (trade mark: Blenmer CP 1005S, produced by Nippon Oil & Fats, Co., Ltd., Mw = 10 x 10⁴) were added. The mixture was then dry blended. Then, while side feeding 43 parts by weight of glass fiber surface-treated with γ-aminopropyltrimethoxy silane (aminosilane-type coupling agent), the mixture was pelletized using a twin-screw extruder.

These pellets were injection molded to form test pieces for a bending test and a Izod test. Using the resulting test pieces, bending test, a thermal distortion test and Izod test were carried out. The results are shown in Table 2.

### EXAMPLES 2 to 9 and COMPARATIVE EXAMPLES 1 to 5

The procedure in Example 1 was repeated with the exception that the components and the proportions thereof were changed as shown in Table 1. The results are shown in Table 2.

In addition, in Example 10, the procedure for Example 1 was repeated with the exception that, using Henschel mixer with 20 L-volume, 0.3 parts by weight of γ-aminopropyltriethoxy silane was sprayed to 100 parts by weight of talc and mixed at 60 to 100°C and 1000 rpm for 5 minutes, then 50 parts by weight of said talc were added to 100 parts by weight of syndiotactic polystyrene at the time of dry blending.

Furthermore, in Example 11, the procedure in Example 10 was repeated except for replacing talc with calcium carbonate.

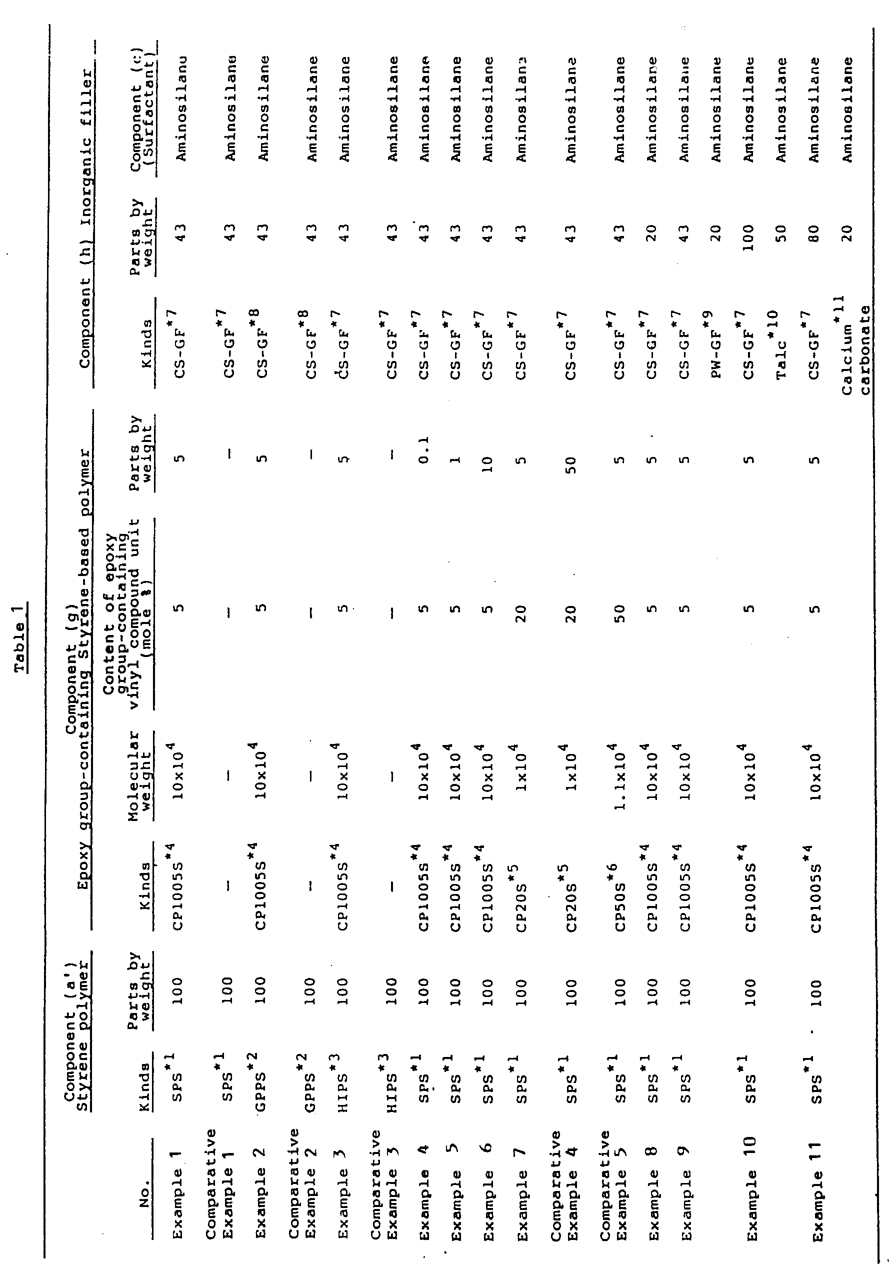

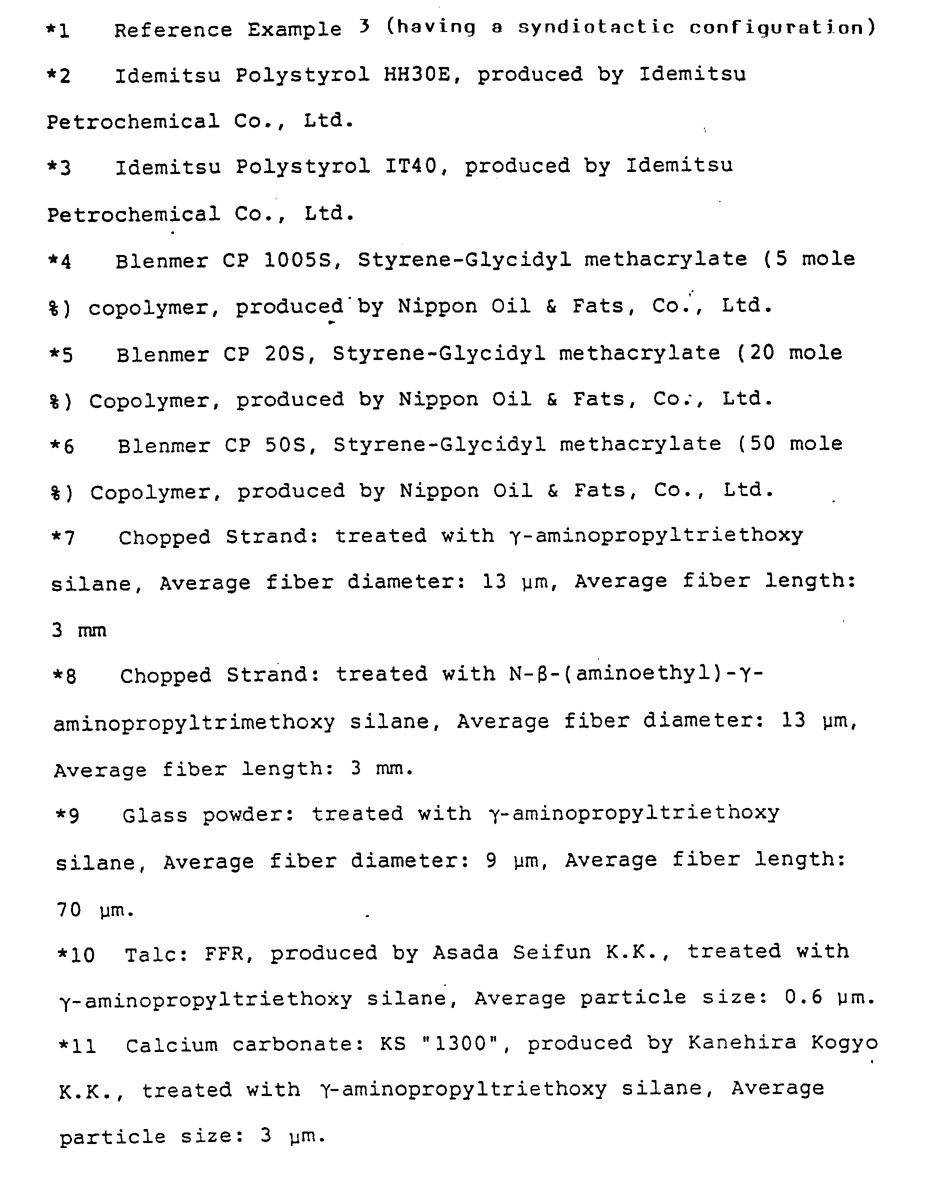

**Table 2**

| No. | Bending^{*1} strength (kg/cm²) | Bending^{*1} elasticity (kg/cm²) | Izot impact resistance^{*2} (with notch) (kg·cm/cm) | Thermal distortion^{*3} (18.5kg/cm²) °C |
|---|---|---|---|---|
| Example 1 | 1,650 | 115,400 | 7.5 | 249 |
| Comparative Example 1 | 1,420 | 85,200 | 4.3 | 242 |
| Example 2 | 1,640 | 103,100 | 7.5 | 101 |
| Comparative Example 2 | 1,380 | 89,800 | 4.1 | 92 |
| Example 3 | 1,560 | 98,600 | 7.6 | 90 |
| Comparative Example 3 | 1,270 | 78,600 | 5.0 | 82 |
| Example 4 | 1,540 | 123,400 | 6.5 | 251 |
| Example 5 | 1,580 | 114,800 | 7.0 | 250 |
| Example 6 | 1,580 | 109,900 | 7.7 | 253 |
| Example 7 | 1,530 | 99,800 | 6.8 | 248 |
| Comparative Example 4 | 1,440 | 90,300 | 5.2 | 240 |
| Comparative Example 5 | 1,370 | 89,100 | 4.1 | 239 |
| Example 8 | 1,520 | 100,200 | 6.6 | 247 |
| Example 9 | 1,650 | 134,800 | 6.7 | 249 |
| Example 10 | 1,730 | 154,500 | 6.8 | 258 |
| Example 11 | 1,690 | 149,300 | 6.9 | 257 |

| | | | | |
|---|---|---|---|---|
| *1 According to JIS-K-7203, | | | | |
| *2 According to JIS-K-7110, | | | | |
| *3 According to JIS-K-7207 | | | | |

### EXAMPLES 12 to 19 and COMPARATIVE EXAMPLES 6 to 10

Glass fiber having a diameter of 13 µm and an average fiber length of 3 mm was coated with the surface treating agents shown in Table 3 by spraying, and then the surface-treated inorganic filler was dried.

To 100 parts by weight of the syndiotactic polystyrene obtained in the above Reference Example 3 were added 0.7 part by weight of (2,6-di-tert-butyl-4-methylphenyl) pentaerythritol diphosphite (trade mark: PEP-36, produced by Adeka Argus Co., Ltd.) and 0.1 part by weight of 2,6-di-tert-butyl-4-phenol (trade mark: Sumilizer BHT, produced by Sumitomo Chemical Industries Ltd.) as anti-oxidants and further 1 part by weight of aluminum p-(tert-butyl)benzoate (trade mark: PTBBA-A1, produced by Dainippon Ink & Chemicals Inc.) was added thereto, and the mixture was dry blended. Then, while side-feeding 43 parts by weight (100 parts by weight in EXAMPLE 19) of the surface-treated glass fiber as mentioned above, the mixture was pelletized using a twin-screw extruder.

The pellets were injection molded to form test pieces for a bending test and an Izod test. Using the resulting test pieces, bending test, thermal distortion test and Izod test were carried out. The prescription of the surface treating agents is shown in Table 3 and the results for the physical properties are shown in Table 4.

The process for preparing the surface treating agent used here is shown below.

### Preparation of Surface Treating Agent

Styrene-glycidyl methacrylate (5 mole %) copolymer (trade mark: Blenmer CP 1005S, produced by Nippon Oil & Fats Co., ltd., Mw = 10 x 10⁴) was previously dissolved in toluene to prepare a 40% by weight solution.

A surface-treating agent was prepared by blending 7.5 parts by weight of the above solution, 1.0 part by weight of γ-aminopropyltriethoxy silane (produced by Nippon Unicar, Silane coupling agent, A-1100), 0.1 part by weight of nonionic lubricant (produced by Sanyo Kasei K.K., Chemitiren SGF-6) as a lubricant and 95.9 parts by weight of water.

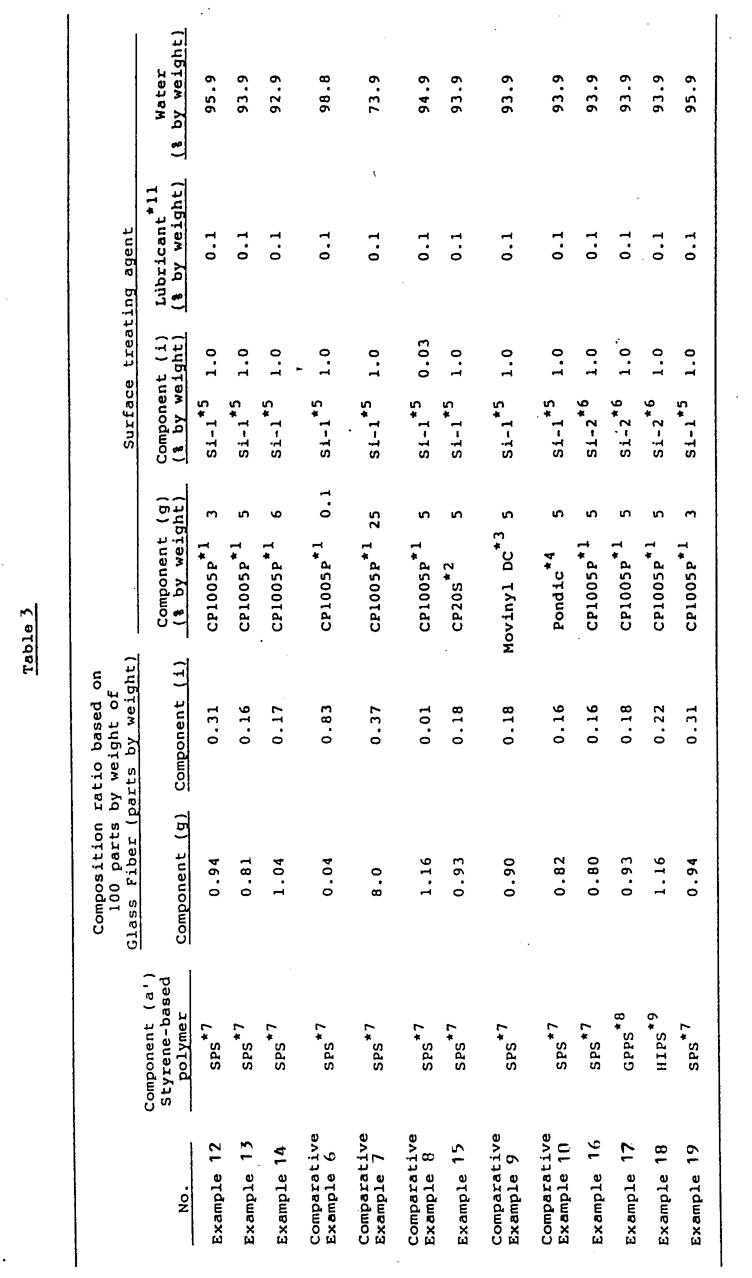

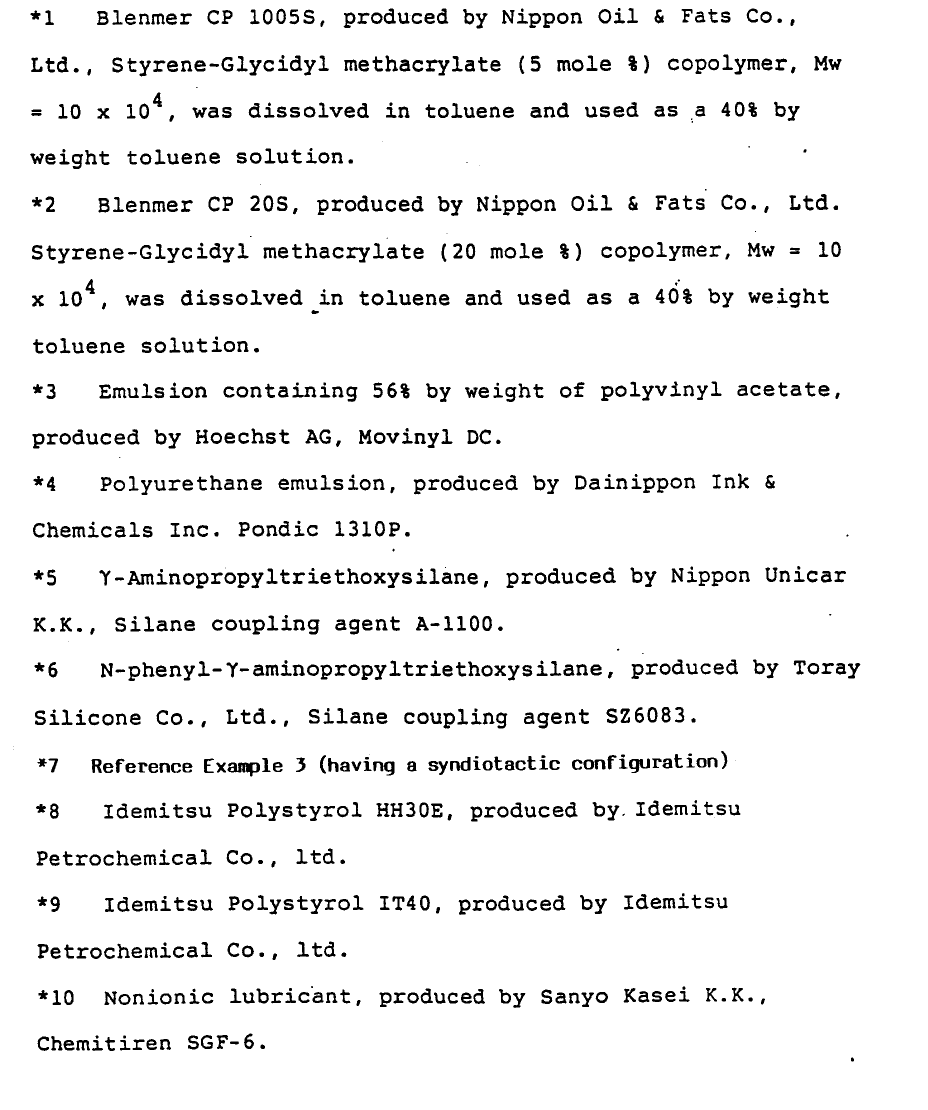

**Table 4**

| No. | Bending^{*1} strength (kg/cm²) | Bending^{*1} elasticity (kg/cm²) | Izot impact resistance^{*2} (with notch) (kg·cm/cm) | Thermal distortion^{*3} (18.5kg/cm²) °C |
|---|---|---|---|---|
| Example 12 | 1,570 | 114,300 | 6.9 | 248 |
| Example 13 | 1,540 | 109,100 | 6.7 | 249 |
| Example 14 | 1,580 | 112,100 | 6.6 | 250 |
| Comparative Example 6 | 1,330 | 86,600 | 4.3 | 242 |
| Comparative Example 7 | 1,410 | 88,600 | 5.2 | 238 |
| Comparative Example 8 | 1,320 | 82,500 | 4.3 | 242 |
| Example 15 | 1,520 | 100,000 | 6.8 | 252 |
| Comparative Example 9 | 1,270 | 85,700 | 4.0 | 239 |
| Comparative Example 10 | 1,260 | 86,800 | 4.2 | 240 |
| Example 16 | 1,550 | 110,700 | 6.9 | 249 |
| Example 17 | 1,580 | 117,300 | 6.8 | 102 |
| Example 18 | 1,500 | 97,600 | 6.7 | 89 |
| Example 19 | 1,550 | 130,000 | 6.5 | 255 |

| | | | | |
|---|---|---|---|---|
| *1 According to JIS-K-7203, | | | | |
| *2 According to JIS-K-7110, | | | | |
| *3 According to JIS-K-7207. | | | | |

## Claims

1. A styrene-based resin composition which comprises
(a') 100 parts by weight of a styrene-based polymer having a syndiotactic configuration such that the proportion in the racemic diad is at least 75 % or the proportion in a racemic pentad is at least 30 % and having no functional group,
(g) 0.01 to 30 parts by weight of a styrene-based polymer having a molecular weight of 1000 to 500 000 and containing 0.01 to 40.0 mole-% of a vinyl compound having an epoxy group, and
(h) 1 to 550 parts by weight of an inorganic filler surface-treated by a silane compound or a titanium compound which is organic.

2. The composition of claim 1, wherein said styrene-based polymer (g) is a copolymer of a vinyl compound having an epoxy group selected from the group consisting of glycidyl methacrylate, glycidyl acrylate, vinyl glycidyl ether, glycidyl ether of hydroxyalkyl (meth)acrylate, glycidyl ether of polyalkyleneglycol (meth)acrylate and glycidyl itaconate.

3. The composition of claim 2 wherein said styrene-based polyer (g) is styrene-glycidyl methacrylate copolymer.

4. The composition of any of claims 1 to 3 wherein said inorganic filler (h) is glass fiber.

5. A styrene-based resin composition which comprises
(a') 100 parts by weight of a styrene-based polymer having a syndiotactic configuration such that the proportion in the racemic diad is at least 75 % or the proportion in a racemic pentad is at least 30 % and having no functional group, and
1 to 550 parts by weight of a surface-treated inorganic filler which comprises 100 parts by weight of an inorganic filler surface-treated with a mixture composed of (g) 0.1 to 5 parts by weight of a styrene-based polymer having a molecular weight of 1000 to 500 000 and containing 0.01 to 40.0 mole-% of a vinyl compound having an epoxy group and (i) 0.05 to 1 part by weight of a silane compound or a titanium compound which is organic.

## Patentansprüche

1. Harzzusammensetzung auf der Basis von Styrol, die umfaßt:
(a') 100 Gewichtsteile eines Polymers auf Styrolbasis mit einer solchen syndiotaktischen Konfiguration, daß der Anteil der racemischen Diaden mindestens 75 % oder der Anteil der racemischen Pentaden mindestens 30 % beträgt, welches keine funktionelle Gruppe besitzt,
(g) 0,01 bis 30 Gewichtsteile eines Polymers auf Styrolbasis, das ein Molekulargewicht von 1000 bis 500000 besitzt und 0,01 bis 40,0 Mol-% einer Vinylverbindung mit einer Epoxygruppe enthält, und
(h) 1 bis 550 Teile eines anorganischen Füllstoffes, der durch eine Silanverbindung oder eine organische Titanverbindung oberflächenbehandelt wurde.

2. Zusammensetzung nach Anspruch 1, worin das erwähnte Polymer auf Styrolbasis (g) ein Copolymer einer Vinylverbindung mit einer Epoxygruppe ist, die ausgewählt wird aus der Gruppe, die besteht aus Glycidylmethacrylat, Glycidylacrylat, Vinylglycidylether, Glycidylether von Hydroxyalkyl(meth)acrylat, Glycidylether von Polyalkylenglykol(meth)acrylat und Glycidylitaconat.

3. Zusammensetzung nach Anspruch 2, worin das erwähnte Polymer auf Styrolbasis (g) ein Styrol-Glycidylmethacrylat-Copolymer ist.

4. Zusammensetzung nach irgend einem der Ansprüche 1 bis 3, worin der anorganische Füllstoff (h) eine Glasfaser ist.

5. Harzzusammensetzung auf Styrolbasis, die umfaßt:
(a') 100 Gewichtsteile eines Polymers auf Styrolbasis mit einer solchen syndiotaktischen Konfiguration, daß der Anteil der racemischen Diaden mindestens 75 % oder der Anteil der racemischen Pentaden mindestens 30 % beträgt, und welches keine funktionelle Gruppe besitzt, und
1 bis 550 Teile eines oberflächenbehandelten anorganischen Füllstoffes, der 100 Gewichtsteile eines anorganischen Füllstoffes umfaßt, der mit einer Mischung oberflächenbehandelt wurde, die sich zusammensetzt aus
(g) 0,1 bis 5 Gewichtsteile eines Polymers auf Styrolbasis mit einem Molekulargewicht von 1000 bis 500000, welches 0,01 bis 40,0 Mol-% einer Vinylverbindung mit einer Epoxygruppe enthält, und
(i) 0,05 bis 1 Gewichtsteile einer Silanverbindung oder einer organischen Titanverbindung.

## Revendications

1. Composition de résine à base de styrène qui comporte :
(a') 100 parties en poids d'un polymère à base de styrène ayant une configuration syndiotactique telle que la proportion en diade racémique soit d'au moins 75 % ou la proportion en pentade racémique soit d'au moins 30 %, et n'ayant pas de groupe fonctionnel ;
(g) de 0,01 à 30 parties en poids d'un polymère à base de styrène ayant un poids moléculaire de 1000 à 500 000 et contenant de 0,01 à 40,0 moles % d'un composé vinylique ayant un groupe époxy, et
(h) de 1 à 550 parties en poids d'une charge inorganique traitée en surface par un composé silane ou un composé de titane qui est organique.

2. Composition selon la revendication 1, où ledit polymère à base de styrène (g) est un copolymère d'un composé vinylique ayant un groupe époxy choisi dans le groupe formé par le méthacrylate de glycidyle, l'acrylate de glycidyle, le vinyl glycidyl éther, l'éther glycidyle d'hydroxyalkyl(méth)acrylate, l'éther glycidyle de polyalkylèneglycol (méth)acrylate et l'itaconate de glycidyle.

3. Composition selon la revendication 2, où ledit polymère (g) à base de styrène est un copolymère de styrène-méthacrylate de glycidyle.

4. Composition selon l'une quelconque des revendications 1 à 3, où ladite charge inorganique (h) est de la fibre de verre.

5. Composition de résine à base de styrène qui comporte :
(a') 100 parties en poids d'un polymère à base de styrène ayant une configuration syndiotactique telle que la proportion en diade racémique soit d'au moins 75 % ou la proportion en pentade racémique soit d'au moins 30 %, et n'ayant pas de groupe fonctionnel, et
de 1 à 550 parties en poids d'une charge inorganique traitée en surface qui comporte 100 parties en poids d'une charge inorganique traitée en surface avec un mélange constitué de (g) de 0,1 à 5 parties en poids d'un polymère à base de styrène ayant un poids moléculaire de 1000 à 500 000 et contenant de 0,01 à 40,0 moles % d'un composé vinylique ayant un groupe époxy, et (i) de 0,05 à 1 partie en poids d'un composé silane ou d'un composé de titane qui est organique.
